# EUROPEAN PATENT APPLICATION

(11) **EP 4 693 080 A1**
(43) Date of publication of application: **11.02.2026**
(21) Application number: 23930693.9
(22) Date of filing: 31.03.2023
(51) Int. Cl.: G06F 21/31, H04W 12/084

(54) **NETWORK NODE AND AUTHENTICATION METHOD**

(71) Applicant: NTT DOCOMO, INC., Chiyoda-ku Tokyo 100-6150 (JP)
(72) Inventor: YAMAUCHI, Kenta, Tokyo 100-6150 (JP); MINOKUCHI, Atsushi, Tokyo 100-6150 (JP)
(74) Representative: Hoffmann Eitle
(86) International application number: PCT/JP2023/013700
(87) International publication number: WO 2024/202059

(57) **Abstract**

A network node includes: a reception unit configured to receive a backchannel authentication request from a network node having a function related to computing resources; and a transmission unit configured to perform an inquiry to a UDR (User Data Repository) in order to identify a user based on an identifier included in the backchannel authentication request. The transmission unit transmits a Web-push authentication request to a terminal of the identified user, the reception unit receives a response to the Web-push authentication request from the terminal, and the transmission unit transmits a success of the back channel authentication request to the network node.

## Description

### TECHNICAL FIELD

The present invention relates to a network node and an authentication method in a communication system.

### BACKGROUND ART

In 3GPP (registered trademark) (3rd Generation Partnership Project), in order to realize even larger system capacity, even faster data transmission speeds, even lower latency in a wireless communication section, etc., a wireless communication method called "5G" or "NR (New Radio)" is being discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture is being discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (for example, Non-Patent Literature 1 and Non-Patent Literature 2).

In addition, for example, an architecture has been discussed in which the Northbound interface between NEF (Network Exposure Function) and AF (Application Function) in the 5G system is formed by CAPIF (Common API Framework) (for example, Non-Patent Literature 3 and Non-Patent Literature 4).

### CITATION LIST

### Non-Patent Literature

Non-Patent Literature 1: 3GPP TS 23.501 V18.0.0 (2022-12)
Non-Patent Literature 2: 3GPP TS 23.502 V18.0.0 (2022-12)
Non-Patent Literature 3: 3GPP TS 29.522 V17.8.0 (2022-12)
Non-Patent Literature 4: 3GPP TS 23.222 V18.0.0 (2022-12)
Non-Patent Literature 5: OpenID Specification "OpenID Connect Client-Initiated Backchannel Authentication Flow - Core 1.0", September 1, 2021

### SUMMARY OF INVENTION

### TECHNICAL PROBLEM

The communication carriers are expected to provide services of providing the computing resource in a network and an execution environment of the computing resource to a subscriber. As one of the use cases, there is a case in which the browser that is started in the 5GS execution environment that is not under the direct user control or operation intends to access the services of the AF (Application Function) to use ID linkage. However, in the conventional 5GS, the ID linkage cannot be implemented.

The present invention has been made in view of the above points, and it is an object of the present invention to execute an authentication procedure by assuming the network execution environment as an RP (Relying party).

### SOLUTION TO PROBLEM

According to the disclosed technique, a network node is provided. The network node includes: a reception unit configured to receive a back channel authentication request from a network node having a function related to computing resources; and a transmission unit configured to perform an inquiry to a UDR (User Data Repository) in order to identify a user based on an identifier included in the back channel authentication request. The transmission unit transmits a Web-push authentication request to a terminal of the identified user, the reception unit receives a response to the Web-push authentication request from the terminal, and the transmission unit transmits a success of the back channel authentication request to the network node.

### ADVANTAGEOUS EFFECTS OF INVENTION

According to the disclosed technique, an authentication procedure can be executed by assuming the network execution environment as an RP (Relying party).

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a sequence diagram for describing an example of a CRMF session establishment procedure in an embodiment of the present invention.
[Fig. 4] is a sequence diagram for describing an example of a CRMF session modification procedure in an embodiment of the present invention.
[Fig. 5] is a sequence diagram for describing an example of a service request procedure in an embodiment of the present invention.
[Fig. 6] is a sequence diagram for describing an example of a CRMF session release procedure in an embodiment of the present invention.
[Fig. 7] is a drawing for describing an example of an API call in an embodiment of the present invention.
[Fig. 8] is a drawing illustrating an example of an authentication procedure in an embodiment of the present invention.
[Fig. 9] is a sequence diagram for describing an example of an authentication procedure in an embodiment of the present invention.
[Fig. 10] is a drawing illustrating an example of a functional structure of a base station 10 in an embodiment of the present invention.
[Fig. 11] is a drawing illustrating an example of a functional configuration of a terminal 20 in an embodiment of the present invention.
[Fig. 12] is a drawing illustrating an example of a hardware structure of the base station 10 and the terminal 20 in an embodiment of the present invention.
[Fig. 13] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It is to be noted that the embodiments described below are examples. Embodiments of the present invention are not limited to the following embodiments.

In operations of a wireless communication system according to an embodiment of the present invention, a conventional technique will be used when it is appropriate. It is to be noted that, although the conventional techniques may be the conventional LTE, the conventional techniques are not limited to the conventional LTE. In addition, it is assumed that the term "LTE" used in the present specification has, unless otherwise specifically mentioned, a broad meaning including a scheme of LTE-Advanced and a scheme after LTE-Advanced (e.g., NR), or a wireless LAN (Local Area Network).

In addition, in an embodiment of the present invention, the expression of radio parameters being "configured" may mean that a predetermined value is pre-configured, or may mean that a radio parameter indicated by a network node 30 or a terminal 20 is configured.

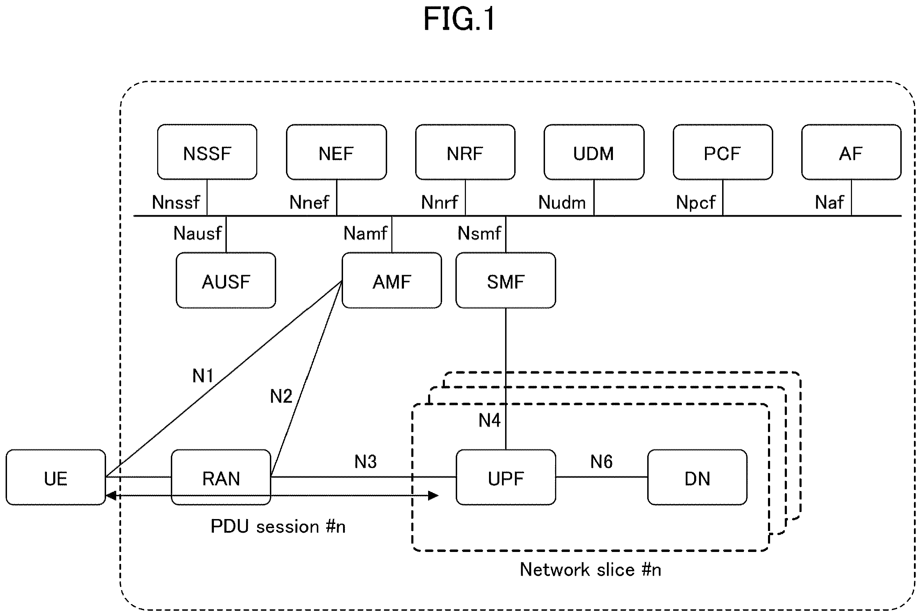

Fig. 1 is a drawing for describing an example of a communication system. As illustrated in Fig. 1, the communication system includes a UE that is a terminal 20, and a plurality of network nodes 30. Hereinafter, one network node 30 corresponds to each function, but multiple functions may be implemented by one network node 30 or one function may be implemented by multiple network nodes 30. In addition, the "connections" described below may be either a logical connection or a physical connection.

A RAN (Radio Access Network) is a network node 30 with wireless access functions, may include a base station 10, and is connected to a UE, an AMF (Access and Mobility Management Function), and a UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with a DN (Data Network), and has functions such as a PDU (Protocol Data Unit) session point to an external unit, routing and forwarding packets, and QoS (Quality of Service) handling of the user plane. A UPF and a DN are included in a network slice. In a wireless communication network in an embodiment of the present invention, multiple network slices may be included.

The AMF is connected to a UE, a RAN, an SMF (Session Management Function), an NSSF (Network Slice Selection Function), an NEF (Network Exposure Function), an NRF (Network Repository Function), a UDM (Unified Data Management), an AUSF (Authentication Server Function), a PCF (Policy Control Function), and an AF (Application Function). The AMF, the SMF, the NSSF, the NEF, the NRF, the UDM, the AUSF, the PCF, and the AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, IP (Internet Protocol) address assignment and management of UEs, a DHCP (Dynamic Host Configuration Protocol) function, an ARP (Address Resolution Protocol) proxy, and a roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. The PCF is a network node 30 having a function of performing policy control of the network. The AF is a network node 30 having a function of controlling an application server. The NRF is a network node 30 having a function of discovering NF instances which provide services. The UDM is a network node 30 that manages subscriber data and authentication data. The UDM is connected to a UDR (User Data Repository) that stores the above-described data.

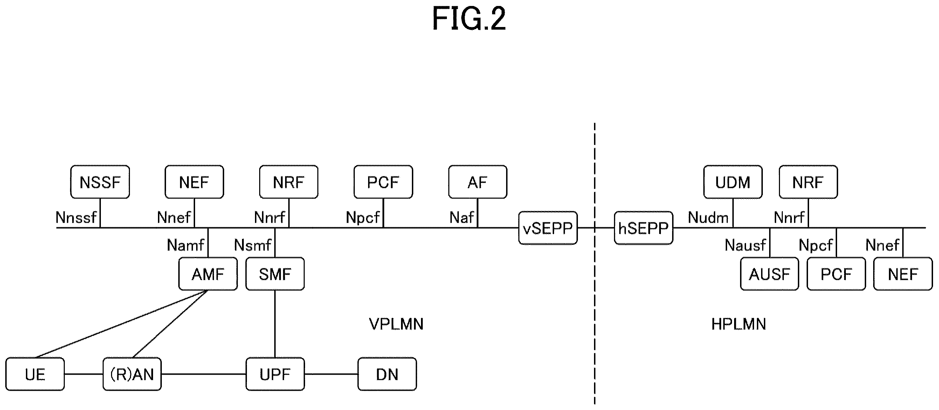

Fig. 2 is a drawing for describing an example of a communication system under a roaming environment. As illustrated in Fig. 2, the network includes a UE that is a terminal 20, and a plurality of network nodes 30. Hereinafter, one network node 30 corresponds to each function, but multiple functions may be implemented by one network node 30 or one function may be implemented by multiple network nodes 30. In addition, the "connections" described below may be either a logical connection or a physical connection.

A RAN is a network node 30 having a wireless access function, and is connected to a UE, an AMF, and a UPF. The AMF is a network node 30 having functions of terminating the RAN interface, terminating NAS, managing registration, managing connection, managing reachability, managing mobility, and the like. The UPF is a network node 30 having functions of a PDU session point to an external unit mutually connected to a DN, routing and forwarding of packets, QoS handling of the user plane, and the like. A UPF and a DN are included in a network slice. In a wireless communication network in an embodiment of the present invention, multiple network slices are included.

The AMF is connected to a UE, a RAN, an SMF, an NSSF, an NEF, an NRF, a UDM, an AUSF, a PCF, an AF, and an SEPP (Security Edge Protection Proxy). The AMF, the SMF, the NSSF, the NEF, the NRF, the UDM, the AUSF, the PCF, and the AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, IP address assignment and management for a UE, a DHCP function, an ARP proxy, and a roaming function. The NEF is a network node 30 having a function of indicating capabilities and events to other NFs. The NSSF is a network node 30 having functions of selecting the network slice to which the UE is to be connected, determining NSSAI to be allowed, determining NSSAI to be configured, determining the AMF set to which the UE is to be connected, and the like. The PCF is a network node 30 having a function of performing policy control of the network. The AF is a network node 30 having a function of controlling an application server. The NRF is a network node 30 having a function of discovering NF instances which provide services. The SEPP is a non-transparent proxy and filters control plane messages between PLMNs (Public Land Mobile Networks). The vSEPP illustrated in Fig. 2 is an SEPP in a visited network, and the hSEPP is an SEPP in a home network.

As illustrated in Fig. 2, the UE is in a roaming environment connected to the RAN and the AMF in the VPLMN (Visited PLMN). The VPLMN and the HPLMN (Home PLMN) are connected to each other via a vSEPP and an hSEPP. The UE can communicate with the UDM of the HPLMN via the AMF of the VPLMN, for example.

Here, there are common requirements described in the following 1) and 2) for some of the 5G Advanced/6G use cases.
1) The communication carriers are required to provide services of providing the network computing resources and an execution environment of the computing resources for a subscriber. In a case where the cloud environment is a prerequisite, the above-described requirements may be equivalent to the communication carriers providing a container for a subscriber. It is to be noted that no specific technology related to a container is required as a prerequisite.
2) The subscriber is required to use the computing resource and the execution environment as a termination point for an outgoing call or an incoming call of communications related to the subscriber.

However, it has been difficult for the conventional techniques to satisfy the above-described requirements.

Accordingly, a new function may be implemented that is referred to as a UCRF (User Computing Resource Function), the new function being capable of configuring the above-described container for each subscriber in the new function. Furthermore, a new function may be implemented that is referred to as a CRMF (Computing Resource Management Function) used for controlling the UCRF. It is to be noted that the names of UCRF and CRMF are just examples, and may be different names.

With respect to the procedure related to sessions, the CRMF may be assumed to be an SMF and the UCRF may be assumed to be a UPF. For example, the following 1) to 3) may be defined.
1) A CRMF session establishment procedure, a CRMF session modification procedure, and a CRMF session release procedure that are similar to the procedures related to PDU sessions may be defined between the UE and the CRMF.
2) A UCRF session establishment procedure, a UCRF session modification procedure, and a UCRF session release procedure that are similar to the procedures related to PFCP (Packet Forwarding Control Protocol) sessions may be defined between the CRMF and the UCRF.
3) The service request procedure for activating the deactivated container may be defined.

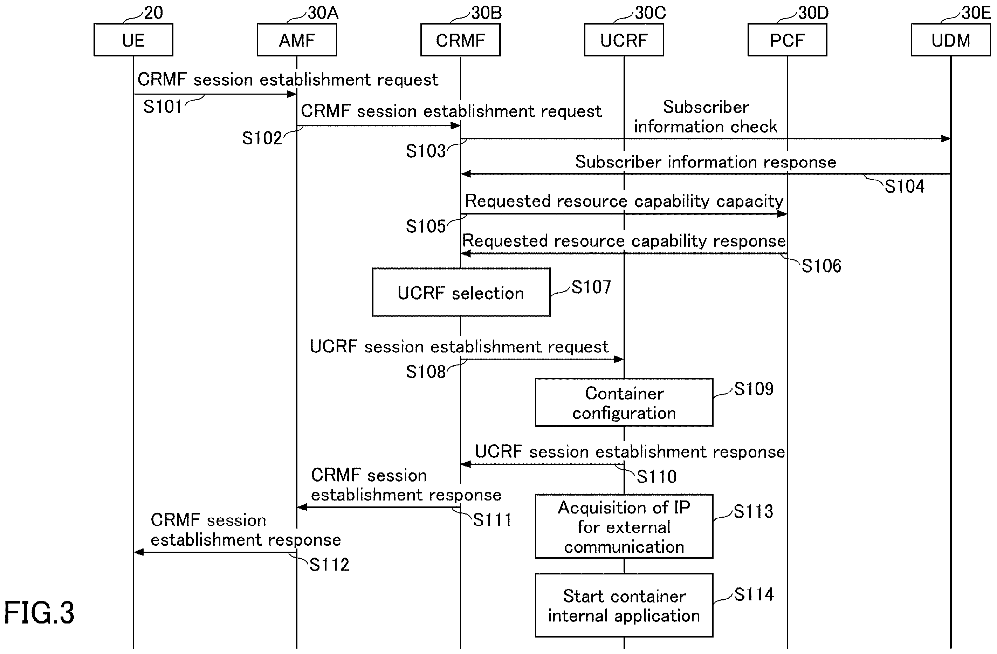

Fig. 3 is a sequence diagram for describing an example of a CRMF session establishment procedure in an embodiment of the present invention. In step S101, the UE 20 transmits a CRMF session establishment request to the AMF 30A. The UE 20 may configure the CRMF session ID related to the termination at the AMF and the requested resource capability capacity indicating the requested computing resource capacity in the CRMF session establishment request. It is to be noted that the "computing resource capacity" described below may include the execution environment, capability, or the like, in addition to the computing resource capacity.

In subsequent step S102, the AMF 30A transmits a CRMF session establishment request to the CRMF 30B. The AMF 30A may include the CRMF session ID configured by the UE 20 and the requested resource capability capacity configured by the UE 20 in the CRMF session establishment request.

In subsequent step S103, the CRMF 30B transmits a subscriber information check for obtaining subscriber information to the UDM 30E. In subsequent step S104, the UDM 30E transmits a subscriber information response to the CRMF 30B. The CRMF 30B determines whether the CRMF session establishment request from the UE 20 is allowed, based on the obtained subscriber information. In a case where the CRMF session establishment request from the UE 20 is allowed based on the determination, the flow may proceed to step S105. On the other hand, in a case where the CRMF session establishment request from the UE 20 is not allowed based on the determination, the CRMF 30B may transmit, to the AMF 30A, a response indicating that the CRMF session establishment request is rejected. The AMF 30A may transmit the response to the UE 20.

In subsequent step S105, the CRMF 30B transmits, to the PCF 30D, the requested resource capability capacity that is obtained according to the CRMF session establishment request. In subsequent step S106, the PCF 30D determines the computing resource capacity to be provided to the UE 20 based on the information included in the obtained requested resource capability capacity and on the policy of the communication carrier, and transmits, to the CRMF 30B, information including the determined capacity as a requested resource capability response.

For example, the PCF 30D may determine to provide the computing resource with the same capacity as the requested resource capability capacity to the UE 20, may determine to provide the computing resource with a capacity that is less than the requested resource capability capacity to the UE 20, or may determine to provide the computing resource with a capacity that is greater than the requested resource capability capacity to the UE 20.

In subsequent step S107, the CRMF 30B selects the UCRF 30C. For example, the CRMF 30B may select a UCRF 30C that is located close to the UE 20, based on the location information of the UE 20. In subsequent step S108, the CRMF 30B transmits a UCRF session establishment request to the UCRF 30C. The CRMF 30B configures a computing resource generation request in the UCRF session establishment request. The computing resource generation request may be configured based on the requested resource capability capacity or may include information indicating the computing resource capacity based on the requested resource capability response that is obtained from the PCF 30D.

In subsequent step S109, the UCRF 30C configures a container. The container may be configured based on the computing resource capacity that is obtained from the CRMF 30B. In subsequent step S110, the UCRF 30C transmits a UCRF session establishment response to the CRMF 30B.

In subsequent step S111, the CRMF 30B transmits a CRMF session establishment response to the AMF 30A. In subsequent step S112, the AMF 30A transmits a CRMF session establishment response to the UE 20.

In addition, in step S113, the UCRF 30C may obtain an IP address for the external communication by using an interface to the DN. In addition, in step S114, the UCRF 30C may start an application in the container. The application may be a communication application that uses the obtained IP address for the external communication.

It is to be noted that, after step S114, the UE 20 may receive services of the communication carrier by using the container that is configured by the UCRF 30C.

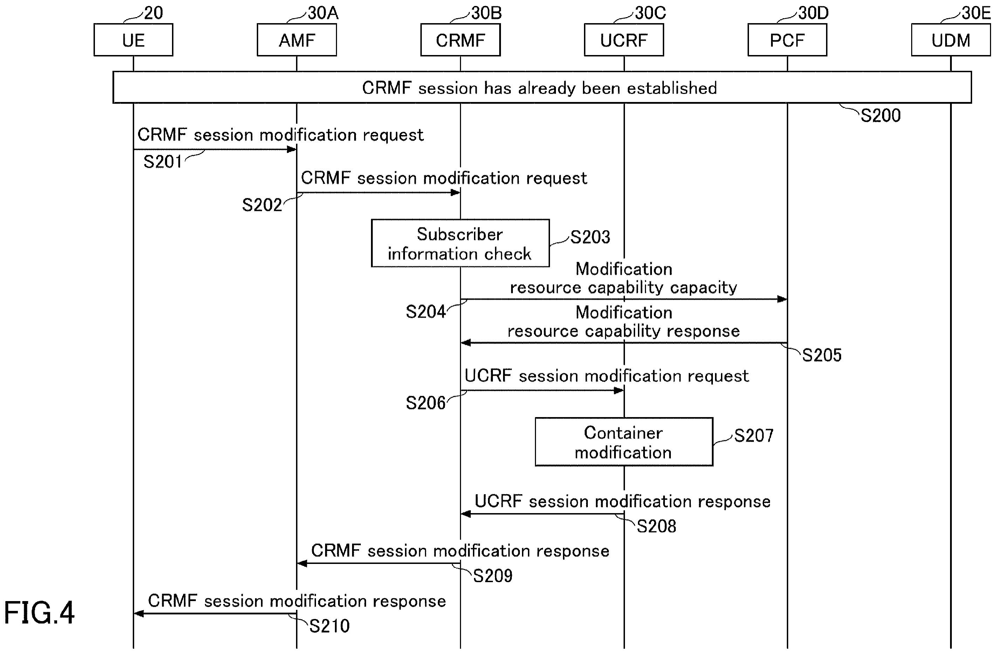

Fig. 4 is a sequence diagram for describing an example of a CRMF session modification procedure in an embodiment of the present invention. In step S200, the CRMF session has already been established.

In step S201, the UE 20 transmits a CRMF session modification request to the AMF 30A by specifying the CRMF session ID. The UE 20 may configure, in the CRMF session modification request, the modification resource capability capacity that is information requesting the computing resource capacity of the container to be modified, the capability, and the modification of the execution environment, etc.

In subsequent step S202, the AMF 30A transmits a CRMF session modification request to the CRMF 30B. The AMF 30A may include the CRMF session ID configured by the UE 20 and the requested resource capability capacity configured by the UE 20 in the CRMF session establishment request.

In subsequent step S203, the CRMF 30B determines whether the CRMF session modification request from the UE 20 is allowed, based on the subscriber information that has already been obtained by the node itself. In a case where the CRMF session establishment request from the UE 20 is allowed based on the determination, the flow may proceed to step S204.

In subsequent step S204, the CRMF 30B transmits the modification resource capability capacity that is obtained according to the CRMF session modification request to the PCF 30D. In subsequent step S205, the PCF 30D determines the computing resource capacity to be provided to the UE 20 based on the information included in the obtained modification resource capability capacity and the policy of the communication carrier, and transmits information including the determined capacity to the CRMF 30B as a modification resource capability response.

For example, the PCF 30D may determine to provide the computing resource with the same capacity as the modification resource capability capacity to the UE 20, may determine to provide the computing resource with a capacity that is less than the modification resource capability capacity to the UE 20, or may determine to provide the computing resource with a capacity that is greater than the modification resource capability capacity to the UE 20.

In subsequent step S206, the CRMF 30B transmits a UCRF session modification request to the UCRF 30C. The CRMF 30B configures a computing resource modification request in the UCRF session modification request. The computing resource modification request may be configured based on the modification resource capability capacity and may include information indicating the computing resource capacity based on the modification resource capability response that is obtained from the PCF 30D.

In subsequent step S207, the UCRF 30C modifies the container based on the UCRF session modification request. The container may be modified based on the computing resource capacity that is obtained from the CRMF 30B. In subsequent step S208, the UCRF 30C transmits a UCRF session modification response to the CRMF 30B.

In subsequent step S209, the CRMF 30B transmits a CRMF session modification response to the AMF 30A. In subsequent step S210, the AMF 30A transmits a CRMF session modification response to the UE 20.

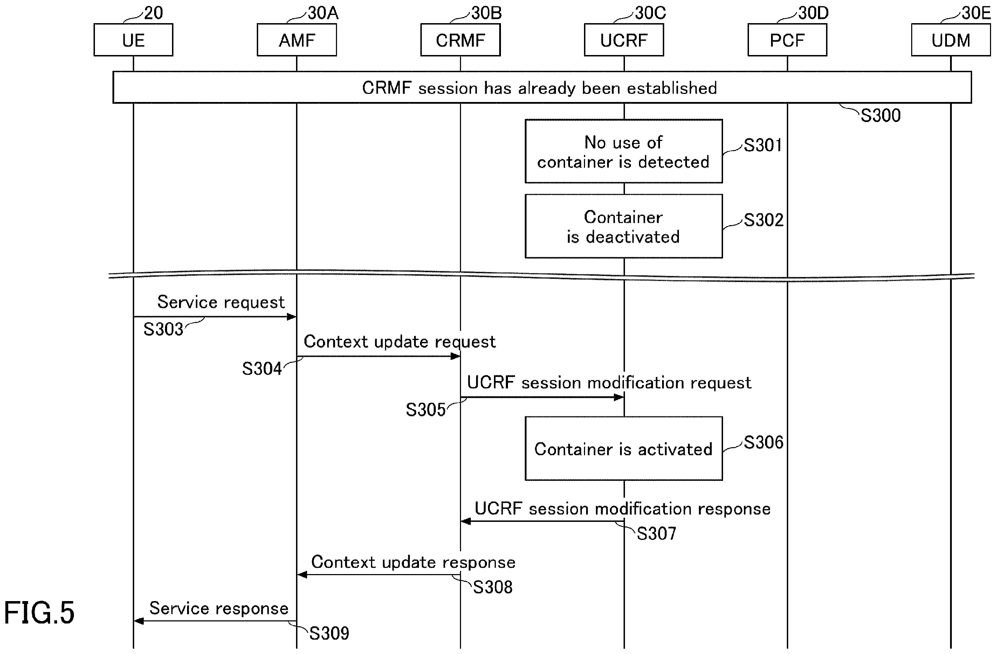

Fig. 5 is a sequence diagram for describing an example of a service request procedure in an embodiment of the present invention. In step S300, the CRMF session has already been established.

In step S301, the UCRF 30C detects the non-use of a container. In subsequent step S302, the UCRF 30C deactivates the container. In a case where a container is not used for a predetermined period, the UCRF 30C may deactivate the container based on the policy of the communication carrier.

In step S303, the UE 20 transmits a service request to the AMF 30A by specifying the CRMF session ID in the activation-required container list. In subsequent step S304, the AMF 30A transmits, to the CRMF 30B, a context update request including an information element (IE) indicating a container state configured as "being activated". It is to be noted that "being activated", "activated", or "deactivated" may be configurable as the value of the information element indicating the container state.

In subsequent step S305, the CRMF 30B transmits a UCRF session modification request to the UCRF 30C. The CRMF 30B configures a computing resource modification request in the UCRF session modification request. The CRMF 30B may configure the information element indicating the container state obtained from the context update request in the computing resource modification request.

In subsequent step S306, the UCRF 30C activates the container based on the UCRF session modification request. In subsequent step S307, the UCRF 30C transmits a UCRF session modification response to the CRMF 30B.

In subsequent step S308, the CRMF 30B transmits a context update response to the AMF 30A. In subsequent step S309, the AMF 30A transmits a service response to the UE 20.

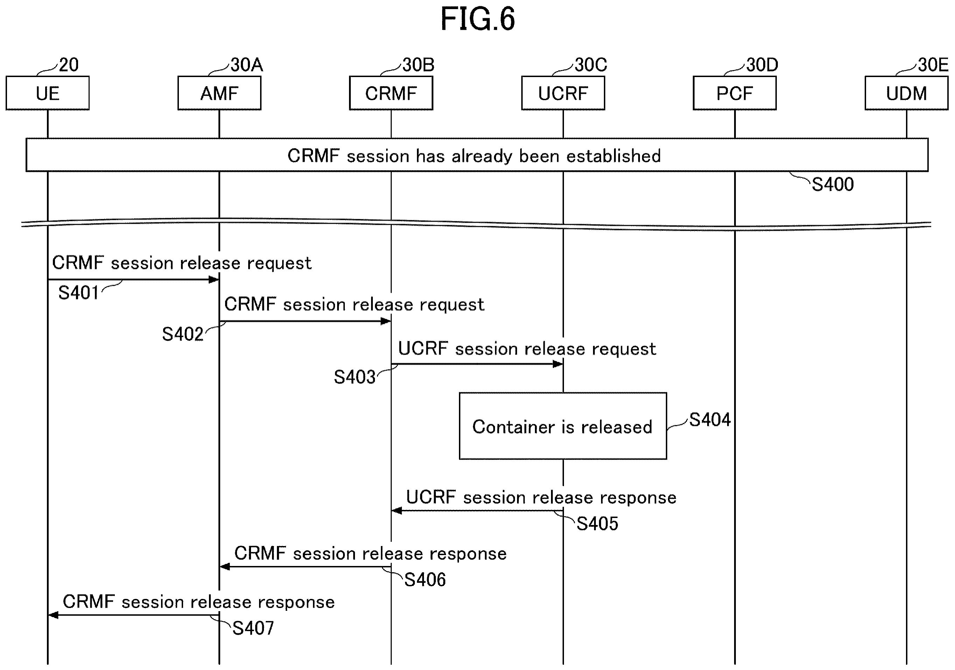

Fig. 6 is a sequence diagram for describing an example of a CRMF session release procedure in an embodiment of the present invention. In step S400, the CRMF session has already been established.

In step S401, the UE 20 transmits a CRMF session release request to the AMF 30A by specifying the CRMF session ID. In subsequent step S402, the AMF 30A transmits a CRMF session release request to the CRMF 30B.

In subsequent step S403, the CRMF 30B transmits, to the UCRF 30C, a UCRF session release request for releasing the UCRF session corresponding to the CRMF session specified by the received CRMF session release request. In subsequent step S404, the UCRF 30C releases the corresponding container based on the received UCRF session release request. In subsequent step S405, the UCRF 30C transmits a UCRF session release response to the CRMF 30B.

In subsequent step S406, the CRMF 30B transmits a CRMF session release response to the AMF 30A. In subsequent step S407, the AMF 30A transmits a CRMF session release response to the UE 20.

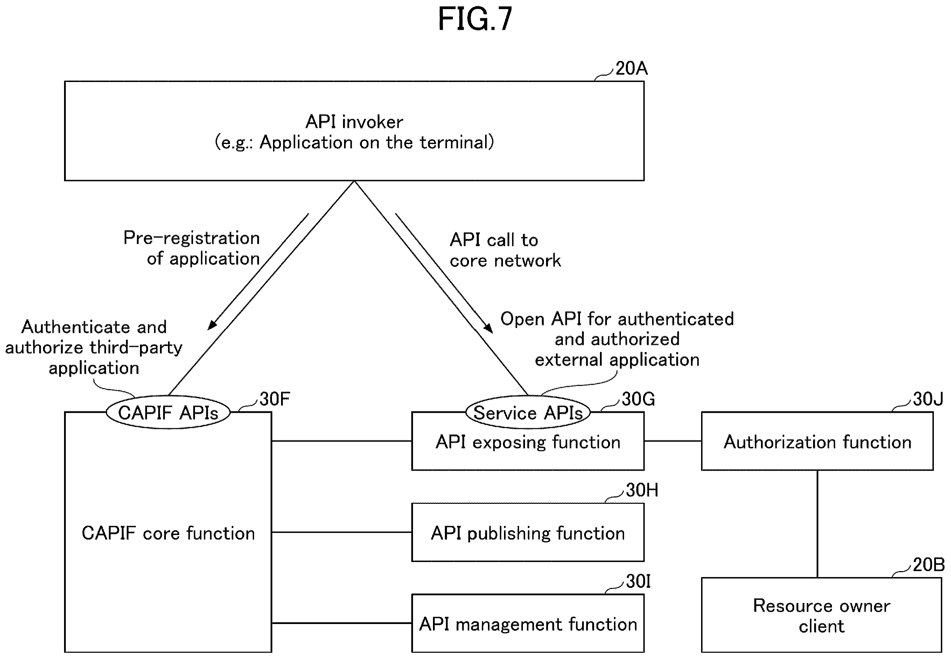

Fig. 7 is a drawing for describing an example of an API (Application Programming Interface) call in an embodiment of the present invention. As illustrated in Fig. 7, the CAPIF core function 30F receives a pre-registration of application transmitted from an API call source (API invoker) 20A, and authenticates and authorizes the third-party application. The API exposing function 30G receives the API call to the core network transmitted from the API call source, and opens API for authenticated and authorized external application.

In addition, as illustrated in Fig. 7, the resource owner client 20B can authorize the API call by the core network via the authorization function 30J. The authorization function 30J performs registration to the API exposing function 30G. After the registration is performed, at the required timing, the API exposing function 30G can check whether the API call is available or not by accessing the authorization function 30J.

It is to be noted that the API call source 20A is, for example, an application on the terminal, and may have a capability of supporting the authentication by providing the identifier of the API call source, a capability of supporting the mutual authentication with the CAPIF core function 30F, a capability of obtaining the authentication when accessing the service API, a capability of discovering the information related to the service API, and a capability of calling the service API.

It is to be noted that the CAPIF core function 30F may have, for example, a capability of supporting the mutual authentication with the API call source 20A, a capability of authenticating the API call source 20A when accessing the service API, a capability of publishing and storing the service API information, a capability of performing an access control of the service API based on the policy configured by the PLMN operator, a capability of recording the service API call log and providing the service API call log to the approval authority, a capability of performing billing based on the service API call log, a capability of monitoring the service API call, a capability of adding and deleting the API call source 20A, a capability of supporting access to the log for the sake of auditing in order to detect, for example, an unauthorized use, and a capability of publishing the service API information together with other CAPIF core functions according to the connection between CAPIFs.

It is to be noted that the API exposing function 30G, the API publishing function 30H, and the API management function 30I may be functions or nodes that belong to one API provider.

It is to be noted that the API exposing function 30G may be a service API exposing provider, and may have a capability of authenticating the API call source 20A based on the information provided by the CAPIF core function 30F, a capability of verifying the authentication provided by the CAPIF core function 30F, and a capability of recording the service API call log in the CAPIF core function 30F.

It is to be noted that the API publishing function 30H may have a capability of publishing, to the CAPIF core function 30F, the service API information that is owned by the API provider.

It is to be noted that the API management function 30I is a function causing the API provider to perform management of the service API, and may have a capability of auditing the service API call log received from the CAPIF core function 30F, a capability of monitoring an event reported by the CAPIF core function 30F, a capability of configuring the policy of the API provider for the CAPIF core function 30F, a capability of monitoring the service API state, a capability of adding and deleting the API call source 20A, and a capability of registering and maintaining the registration information of the API provider in the CAPIF core function 30F.

It is to be noted that each of the CAPIF core function 30F, the API exposing function 30G, the API publishing function 30H, and the API management function 30I may be configured as a network node 30, or, the API exposing function 30G, the API publishing function 30H, and the API management function 30I may be configured as a single network node 30, for example. In addition, the API call source 20A, the resource owner client 20B, and the authorization function 30J may be a communication apparatus such as a terminal or a server, or may be other communication apparatuses.

The services of providing the computing resources in the network and the execution environment on the computing resources are expected to be provided to subscribers by the communication carrier as shown in the above-described UCRF and the CRMF. As one of the use cases, there is a case in which the browser that is started in the 5GS execution environment that is not under the direct user control or operation intends to access the services of the AF (Application Function) to use ID linkage. However, in the conventional 5GS, the ID linkage cannot be implemented.

Accordingly, an enhancement described below may be performed in which the browser that is started on the UCRF is treated as an RP (Relying party) and can perform an OIDC-CIBA (OpenID Connect Client-Initiated Backchannel Authentication) (refer to Non-Patent Literature 5) sequence in the CAPIF core function and the CAPIF authorization function. An identifier is defined in the UCRF or in the container in the UCRF, and the UCRF internal browser transmits the identifier to the CAPIF authorization function by including the identifier in the login_hint parameter of the OIDC-CIBA.

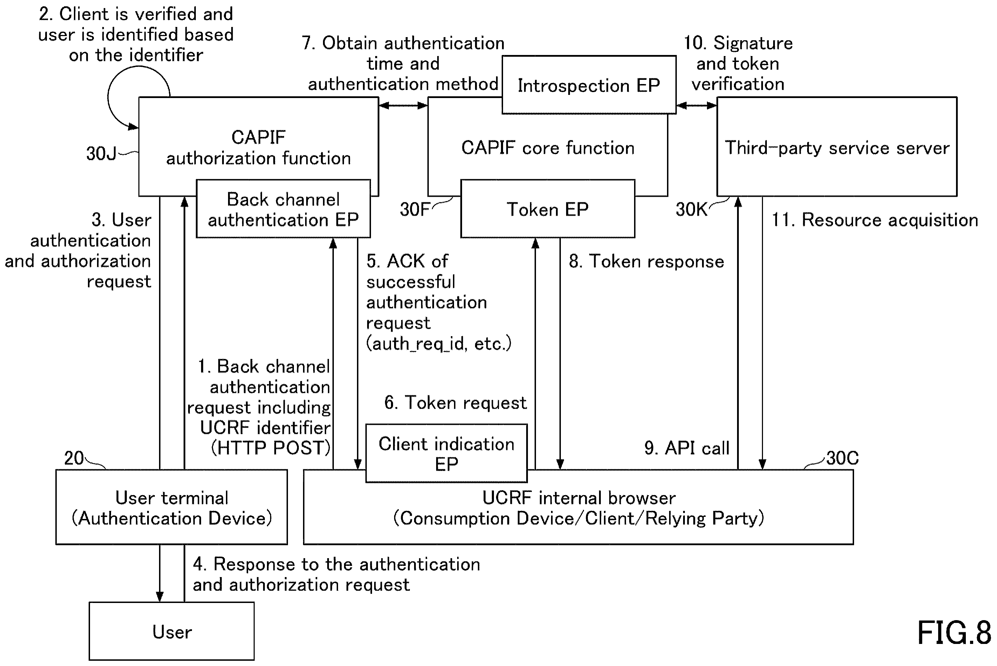

Fig. 8 is a drawing illustrating an example of an authentication procedure in an embodiment of the present invention. Fig. 8 illustrates an example of an OIDC-CIBA procedure in which the UCRF is treated as an RP. It is to be noted that the flow in Fig. 8 may be a flow of a case of CIBA Poll mode. As illustrated in Fig. 8, the internal browser of the UCRF 30C includes a client indication EP (End point). The CAPIF authorization function 30J includes a backchannel authentication EP. The CAPIF core function 30F includes a token EP and an introspection EP. The user terminal 20 may be an Authentication Device. The internal browser of the UCRF 30C may be a Consumption Device, Client, and/or a Relying Party.

The internal browser of the UCRF 30C transmits a backchannel authentication request (HTTP POST) including the identifier of the UCRF to the backchannel authentication EP of the CAPIF authorization function 30J. Subsequently, the CAPIF authorization function 30J verifies the client and identifies the user based on the identifier. Subsequently, the CAPIF authorization function 30J transmits a user authentication and authorization request to the user terminal 20. Subsequently, the user transmits a response to the authentication and authorization request from the user terminal 20 to the CAPIF authorization function 30J.

Subsequently, the backchannel authentication EP of the CAPIF authorization function 30J transmits ACK of successful authentication request (auth_req_id, etc.) to the internal browser of the UCRF 30C. Subsequently, the internal browser of the UCRF 30C transmits a token request including auth_req_id to the token EP of the CAPIF core function 30F. Subsequently, the CAPIF core function 30F obtains the authentication time and the authentication method from the CAPIF authorization function 30J, based on auth_req_id. Subsequently, the token EP of the CAPIF core function 30F transmits a token response to the internal browser of the UCRF 30C.

Subsequently, the internal browser of the UCRF 30C transmits a token to the third-party service server 30K to call API. Subsequently, the third-party service server 30K performs signature and token verification with the introspection EP of the CAPIF core function 30F. Subsequently, the third-party service server 30K provides resources to the internal browser of the UCRF 30C. The internal browser of the UCRF 30C obtains resources from the third-party service server 30K. The third-party service server may be referred to as an external service server.

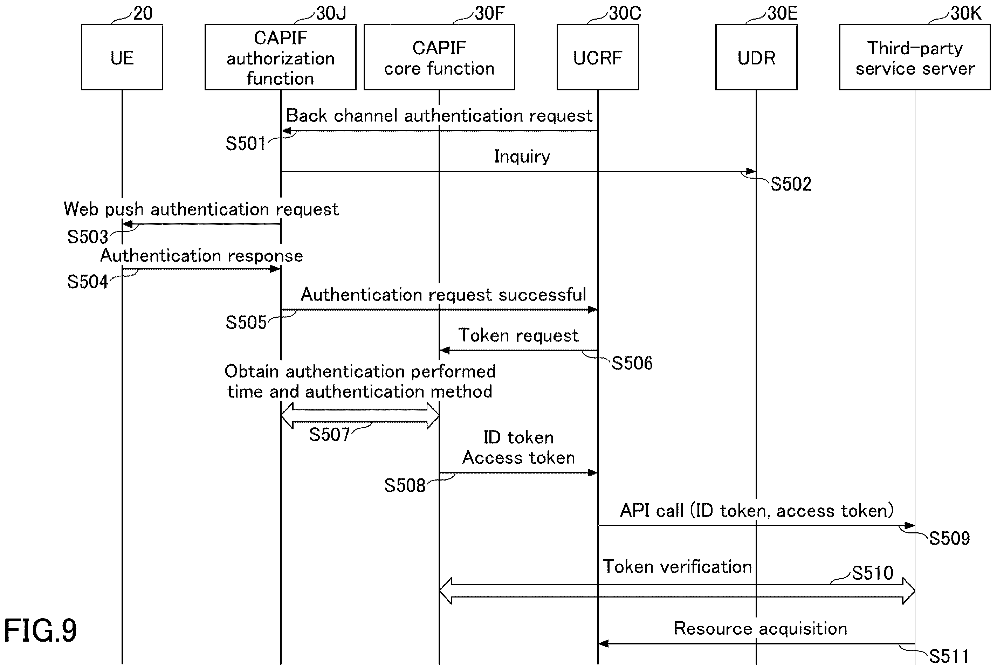

Fig. 9 is a sequence diagram for describing an example of an authentication procedure in an embodiment of the present invention. In step S501, the internal browser of the UCRF 30C transmits a backchannel authentication request to the CAPIF authorization function 30J. The backchannel authentication request includes, as a login_hint parameter, an identifier of the UCRF or the container in use. In subsequent step S502, the CAPIF authorization function 30J transmits an inquiry to the UDR 30E based on the received identifier, and identifies the SUPI (Subscription Permanent Identifier) of the user terminal 20.

In subsequent step S503, the CAPIF authorization function 30J transmits a Web push authentication request to the identified user terminal 20. In subsequent step S504, the user responds to the authentication request and the CAPIF authorization function 30J receives the response. In subsequent step S505, the CAPIF authorization function 30J transmits ACK of successful backchannel authentication request including auth_req_id to the internal browser of the UCRF 30C.

In subsequent step S506, the internal browser of the UCRF 30C transmits a token request including auth_req_id to the CAPIF core function 30F. In subsequent step S507, the CAPIF core function 30F accesses the CAPIF authorization function 30J by using the auth_req_id and obtains the authentication execution time and the authentication method. The authentication execution time and the authentication method may be an authentication execution time and an authentication method related to the backchannel authentication request.

In subsequent step S508, the CAPIF core function 30F generates an ID token and an access token based on the obtained authentication execution time and the authentication method and transmits the generated ID token and the access token to the internal browser of the UCRF 30C. In subsequent step S509, the internal browser of the UCRF 30C transmits the ID token and the access token to the third-party service server 30K to call API.

In subsequent step S510, the third-party service server 30K performs token verification with the CAPIF core function 30F. The verification may be a verification of determining whether or not the tokens correspond to the ID token and the access token generated in step S508. The CAPIF core function 30F may transmit the result of token verification to the third-party service server 30K.

In subsequent step S511, the third-party service server 30K provides resources to the internal browser of the UCRF 30C. The internal browser of the UCRF 30C obtains resources from the third-party service server 30K.

Here, the CAPIF core function 30F operates as an IdP (Identify Provider) for the third-party service server 30K that is located outside the 5GS.

According to the above-described embodiment, the browser that is started in the 5GS execution environment that is not under the direct user control or operation can access the services of the AF (Application Function) to use ID linkage.

In other words, an authentication procedure can be executed by assuming the network execution environment as an RP (Relying party).

### (Device configuration)

Next, a functional configuration example of the base station 10, network node 30 and the terminal 20 that perform processes and operations described above will be described. The base station 10, the network node 30, and the terminal 20 include functions for implementing the embodiments described above. It should be noted, however, that each of the base station 10, the network node 30, and the terminal 20 may include only some of the functions in the embodiments.

### <Base station 10 and network node 30>

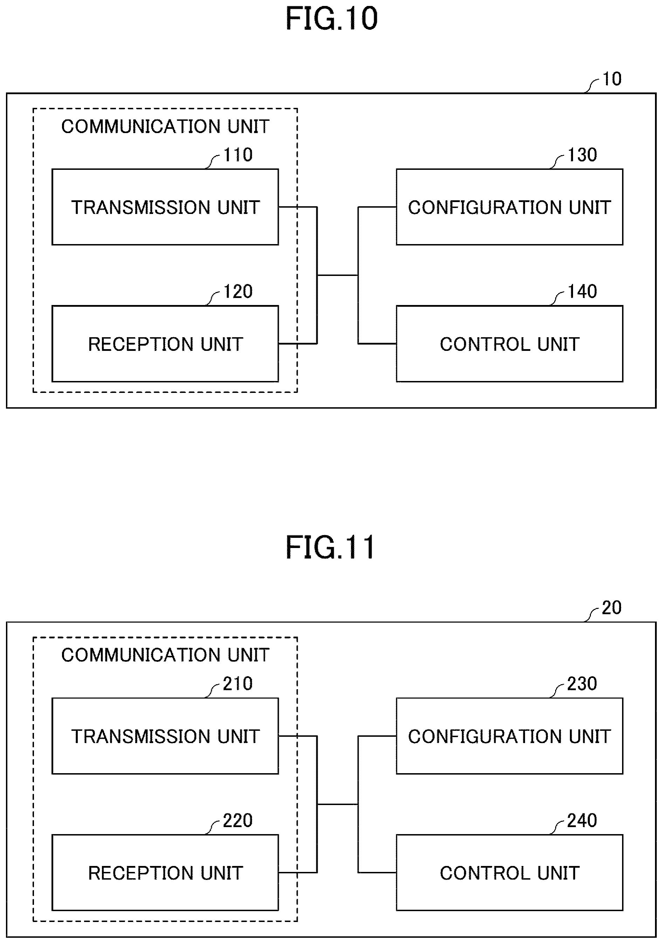

Fig. 10 is a drawing illustrating an example of a functional configuration of the base station 10. As illustrated in Fig. 10, the base station 10 includes a transmission unit 110, a reception unit 120, a configuration unit 130, and a control unit 140. The functional configuration illustrated in Fig. 10 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to the computing resource and the authentication procedure.

The control unit 140 performs a process related to the computing resource and the authentication procedure in the network as described in an embodiment of the present invention. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 11 is a drawing illustrating an example of a functional configuration of the terminal 20. As illustrated in Fig. 11, the terminal 20 includes a transmission unit 210, a reception unit 220, a configuration unit 230, and a control unit 240. The functional configuration illustrated in Fig. 11 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL control signals or reference signals, and the like, transmitted from the network node 30.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, configurations related to the computing resource and the authentication procedure.

The control unit 240 performs a process related to the connection control to the network and the network slice as described in the embodiments. Further, the control unit 240 performs a process related to the authentication procedure. The functional units related to signal transmission in the authentication control unit 240 may be included in the transmission unit 210, and the functional units related to signal reception in the control unit 240 may be included in the reception unit 220.

### (Hardware structure)

The block diagrams that have been used to describe the above embodiments (Fig. 10 and Fig. 11) indicate blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

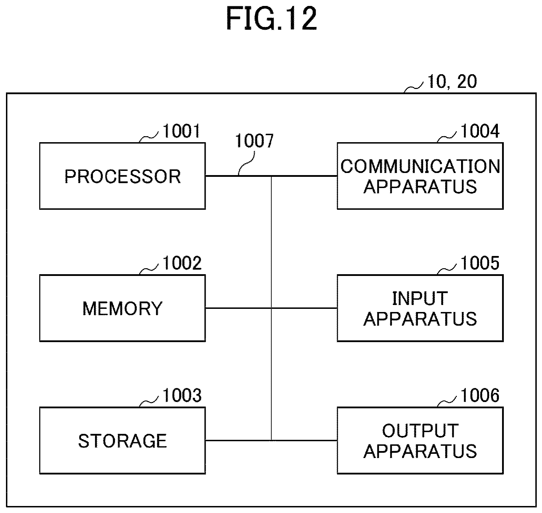

For example, the network node 30, terminal 20, etc., according to an embodiment of the present disclosure may function as a computer for processing the radio communication method of the present disclosure. Fig. 12 is a drawing illustrating an example of a hardware structure of the base station 10 and the terminal 20 according to an embodiment of the present disclosure. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word "apparatus" can be interpreted as a circuit, a device, a section, a unit, and so on. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 10 may be implemented by control programs that are stored in the memory 1002 and that operate on the processor 1001. In addition, for example, the control unit 240 of the terminal 20 illustrated in Fig. 11 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

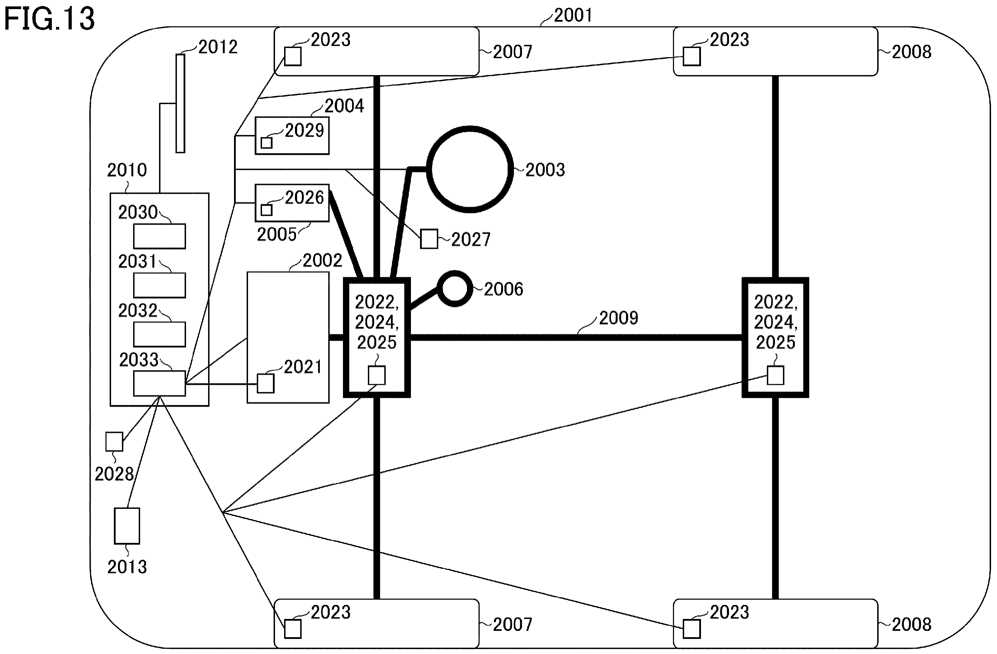

An example of a configuration of a vehicle 2001 is illustrated in Fig.13. As illustrated in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a network node is provided. The network node includes: a reception unit configured to receive a backchannel authentication request from a network node having a function related to computing resources; and a transmission unit configured to perform an inquiry to a UDR (User Data Repository) in order to identify a user based on an identifier included in the backchannel authentication request. The transmission unit transmits a Web-push authentication request to a terminal of the identified user, the reception unit receives a response to the Web-push authentication request from the terminal, and the transmission unit transmits a success of the backchannel authentication request to the network node.

According to the above-described configuration, the browser that is started in the 5GS execution environment that is not under the direct user control or operation can access the services of the AF (Application Function) to use ID linkage. In other words, an authentication procedure can be executed by assuming the network execution environment as an RP (Relying party).

The transmission unit may transmit the authentication execution time and the authentication method for the backchannel authentication request to the CAPIF (Common API framework) core function. According to the above-described configuration, the browser that is started in the 5GS execution environment that is not under the direct user control or operation can access the services of the AF (Application Function) to use ID linkage.

In addition, according to an embodiment of the present invention, a network node is provided. The network node includes: a reception unit configured to receive a token request from a network node that has a function related to the computing resources; a control unit configured to obtain the authentication execution time and the authentication method from the CAPIF (Common API Framework) authorization function and to generate a token based on the authentication execution time and the authentication method; and a transmission unit configured to transmit the token to the network node. The transmission unit transmits a verification result related to the token to the external service server.

According to the above-described configuration, the browser that is started in the 5GS execution environment that is not under the direct user control or operation can access the services of the AF (Application Function) to use ID linkage. In other words, an authentication procedure can be executed by assuming the network execution environment as an RP (Relying party).

In addition, according to an embodiment of the present invention, a network node is provided. The network node includes: a transmission unit configured to transmit a backchannel authentication request fo a CAPIF (Common API Framework) authorization function; and a reception unit configured to receive a success of the backchannel authentication request from the CAPIF authorization function. The transmission unit transmits a token request fo a CAPIF core function, the reception unit receives a token from the CAPIF core function, the transmission unit transmits the token to an external service server to call API (Application Programming Interface), and the reception unit obtains resources from the external service server.

According to the above-described configuration, the browser that is started in the 5GS execution environment that is not under the direct user control or operation can access the services of the AF (Application Function) to use ID linkage. In other words, an authentication procedure can be executed by assuming the network execution environment as an RP (Relying party).

In addition, according to an embodiment of the present invention, an authentication method performed by a network node is provided. The authentication method includes: receiving a backchannel authentication request from a network node having a function related to computing resources; performing an inquiry to a UDR (User Data Repository) in order to identify a user based on an identifier included in the backchannel authentication request; transmitting a Web-push authentication request to a terminal of the identified user; receiving a response to the Web-push authentication request from the terminal, and transmitting a success of the backchannel authentication request to the network node.

According to the above-described configuration, the browser that is started in the 5GS execution environment that is not under the direct user control or operation can access the services of the AF (Application Function) to use ID linkage. In other words, an authentication procedure can be executed by assuming the network execution environment as an RP (Relying party).

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, each of the network node 30 and the terminal 20 has been described by using functional block diagrams. However, the apparatuses may be implemented by hardware, software, or a combination of hardware and software. The software executed by a processor included in the network node 30 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; and 5G, and the like) to be applied.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

The particular operations, that are supposed to be performed by the network node 30 in the present specification, may be performed by an upper node in some cases. In a network including one or more network nodes including the network node 30, it is apparent that various operations performed for communicating with the terminal 20 may be performed by at least one of the network node 30 and another network node other than the network node 30 (for example, but not limited to, MME or S-GW). According to the above, a case is described in which there is another single network node other than the network node 30. However, the other network node may be a combination of multiple other network nodes (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station may be a vehicle (e.g., a car, an airplane, etc.), an unmanned mobile body (e.g., a drone, an automated vehicle, etc.), or a robot (manned or unmanned). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, a function of the network node 30 described above may be provided by the terminal 20. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Network node
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A network node comprising:
a reception unit configured to receive a backchannel authentication request from a network node that has a function related to computing resources; and
a transmission unit configured to perform an inquiry to a UDR (User Data Repository) for identifying a user based on an identifier included in the backchannel authentication request, wherein
the transmission unit transmits a Web-push authentication request to a terminal of the identified user,
the reception unit receives a response to the Web-push authentication request from the terminal, and
the transmission unit transmits a success of the backchannel authentication request to the network node.

2. The network node as claimed in claim 1, wherein
the transmission unit transmits an authentication execution time and an authentication method for the backchannel authentication request to a CAPIF (Common API framework) core function.

3. A network node comprising:
a reception unit configured to receive a token request from a network node that has a function related to computing resources;
a control unit configured to obtain the authentication execution time and the authentication method from a CAPIF (Common API Framework) authorization function and to generate a token based on the authentication execution time and the authentication method; and
a transmission unit configured to transmit the token to the network node, wherein
the transmission unit transmits a result of verification related to the token to an external service server.

4. A network node comprising:
a transmission unit configured to transmit a backchannel authentication request to a CAPIF (Common API Framework) authorization function; and
a reception unit configured to receive a success of the backchannel authentication request from the CAPIF authorization function, wherein
the transmission unit transmits a token request to a CAPIF core function,
the reception unit receives a token from the CAPIF core function,
the transmission unit transmits the token to an external service server to call an API (Application Programming Interface), and
the reception unit obtains resources from the external service server.

5. An authentication method performed by a network node, the authentication method comprising:
receiving a backchannel authentication request from a network node that has a function related to computing resources;
performing an inquiry to a UDR (User Data Repository) for identifying a user based on an identifier included in the backchannel authentication request;
transmitting a Web-push authentication request to a terminal of the identified user;
receiving a response to the Web-push authentication request from the terminal; and
transmitting a success of the backchannel authentication request to the network node.
